# EUROPÄISCHE PATENTANMELDUNG

(11) **EP 1 653 718 A1**
(43) Veröffentlichungstag der Anmeldung: **03.05.2006**
(21) Anmeldenummer: 04025373.4
(22) Anmeldetag: 26.10.2004
(51) Int. Cl.: H04M 3/48

(54) **Verfahren zur Vergabe eines Kennzeichens zur Erlaubnis eines terminierenden automatischen Rückrufs**

(71) Anmelder: Siemens Schweiz AG, 8047 Zürich (CH)
(72) Erfinder: Goldstein, Peter, 8800 Thalwil (CH)
(74) Vertreter: Kley, Hansjörg

(57) **Zusammenfassung**

Der Zusatzdienst automatischer Rückruf ist gemäss den Empfehlungen und Standards von ITU-T und ETSI nur für den A-Teilnehmer (A-Tln) administrierbar. Insbesondere für über einen IN-Dienst adressierbare B-Teilnehmer (Tln) ist die nur pro Vermittlungsstelle (VSt) mögliche Vergabe des Kennzeichens zur Erlaubnis eines automatischen Rückrufes nachteilig. Es wird ein Verfahren zur Vergabe eines B-teilnehmerindividuellen Kennzeichens zur Erlaubnis eines automatischen Rückrufs angegeben, das vom oder für den B-Teilnehmer individuell administriert werden kann. Dazu ist pro B-Teilnehmer ein individuell und ggf. durch den Teilnehmer selbst administrierbarer Indikator (cc term) in einem Speicher (Tln-Sp) vorgesehen. Bei einem Verbindungsaufbau wird ein Abbild dieses Indikators (CC Ind) an die Vermittlungsstelle (Vst/SSP) des A-Teilnehmers auf die bekannte Weise zurücksignalisiert.

## Beschreibung

Die vorliegende Erfindung betrifft ein Verfahren zur Vergabe eines Kennzeichens zur Erlaubnis eines terminierenden automatischen Rückrufs gemäss dem Oberbegriff des Patentanspruchs 1.

Im folgenden werden anstelle einer deutschen Nichtfachsprache die englisch-sprachige Nomenklatur und Akronyme aus den Normen von ITU-T und ETSI benutzt, wie z.B.
- «IN» «Intelligent Network »,
- «SCP» «Service Control Point»,
- «CCBS/CCNR» automatischer Rückruf bei besetzt/keine Antwort, usw. Durch die Verwendung standardisierter Begriffe und Akronyme lassen sich Unklarheiten vermeiden. Eine Liste der verwendeten Akronyme, Abkürzungen und Begriffe am Schluss dieses Dokumentes bildet integraler Bestandteil dieser Schrift.

Die vorliegende Erfindung betrifft das Gebiet der End zu End-Zusatzdienste wie zum Beispiel den automatischer Rückruf «call completion». Der Dienst automatischer Rückruf «call completion» für die Verbindungen von einem (rufenden) Teilnehmer A mit einem (gerufenen) Teilnehmer B ist in den folgenden Ausprägungen CCBS und CCNR in [1] bzw. [2] spezifiziert:
- Automatischer Rückruf bei Besetzt (CCBS);
- Automatischer Rückruf bei Nichtmelden (CCNR).

Auf der Seite der A-Teilnehmer ist gemäss [1] festgelegt, dass der Dienst CCBS A-Teilnehmerindividuell zugeteilt werden kann, siehe dazu in [1] «3.1 provision/withdrawal», 1. Absatz.

Auf der Seite der B-Teilnehmer ist im allgemeinen und insbesondere für solche, die an einer automatischen Teilnehmervermittlungsanlage - auch Nebenstelle genannt - angeschlossen sind, keine individuelle Zuordnung gemäss ITU-T oder ETSI normiert, ob für diese B-Teilnehmer der Dienst automatischer Rückruf aktiviert werden darf. Der Grund liegt darin, dass die Notwendigkeit einer Differenzierung auf Stufe Teilnehmer nicht erkannt wurde. Deshalb wird die Information, ob die Aktivierung eines automatischen Rückrufes erlaubt ist, pro Vermittlungsstelle von der vorhandenen bzw. nicht vorhandenen Funktionalität in der Vermittlungsstelle abgeleitet.

Diese vermittlungsstellenspezifische Festlegung ohne Berücksichtigung der Art des Teilnehmers erweist sich als unzureichend. Dies gilt auch bei Verbindungen, die eine Nummernumrechnung enthalten, wie das bei IN-Verbindungen der Fall ist, und wo der SCP (gilt ab IN Capability Set 2) aufgrund des betreffenden IN-Dienstes entscheidet, ohne Berücksichtigung der Art des Teilnehmers, ob der von der Vermittlungsstelle des B-Teilnehmers gesetzte Indikator «call completion» mit dem Inhalt «possible» , ggf. mit dem Inhalt «not possible» überschrieben werden soll. Dieser Indikator bzw. dessen Abbild ist in der Meldung «RELEASE» für den Verbindungsabbau mit Ursprung Vermittlungsstelle des B-Teilnehmers enthalten. So wird z.B. bei IN-Verbindungen mit der Nummernfolge 0900... der Indikator «call completion» CCI von «possible» auf «not possible» gesetzt. Damit kann zusätzlich verhindert werden, dass durch einen automatischen Rückruf die IN-spezifische Vergebührung umgangen werden kann. Bei gewissen IN-Diensten, wie z.B. «Corporate Access» (virtueller, geographisch unabhängiger Durchwahlbereich für Unternehmen) ist diese Modifikation des Indikators jedoch auf Basis des IN-Dienstes allein nicht hinreichend, da hier zwischen der Rufnummer der Zentrale und den Rufnummern der einzelnen Mitarbeitern eines Unternehmens unterschieden werden sollte. Coporate Access» Unternehmen mit verteilten Standorten verwenden Corporate Access, um unter einer Rufnummer (unabhängig vom Ort) erreichbar zu sein, wobei geographische (nächstgelegener Unternehmensstandort) und zeitliche (Unternehmensstandort, der zum jeweiligen Zeitpunkt die Zentrale mit Personal besetzt hat, z.B. regionale Feiertage, Kriterien berücksichtigt werden.

Die pro Vermittlungsstelle erfolgende Festlegung der Erlaubnis des automatischen Rückrufes ist auch deshalb unzureichend, weil der Netzbetreiber wegen der beschränkten Verfügbarkeit dieses Zusatzdienstes Störungsmeldungen erhält, denen nicht eine Störung sondern eine begrenzte Funktionalität zugrunde liegt.

In EN 301 140 [3] ist beschrieben, dass der SCP aufgrund des IN-Dienstes, nicht aber teilnehmerindividuell, den SSP instruieren kann, den Indikator «call completion» in der «RELEASE» Meldung ggf. zu modifizieren.

Der vorliegenden Erfindung liegt daher die Aufgabe zugrunde, ein Verfahren zur Vergabe eines Kennzeichens zur Erlaubnis eines terminierenden automatischen Rückrufs anzugeben, der vom oder für den B-Teilnehmer spezifisch administriert werden kann. Insbesondere soll dieses Verfahren auch für (nur) über einen IN-Dienst adressierbare B-Teilnehmer die Bereitstellung der zutreffenden Information im Indikator «call completion» ermöglichen.

Diese Aufgabe wird erfindungsgemäss durch das im Patentanspruch 1 angegebene Verfahren gelöst.

Gemäss den erfindungsgemässen Verfahrenschritten, wonach
- A: der Indikator B-teilnehmerindividuell bereit gestellt wird,
- B: die Abbildung des Indikators der Vermittlungsstelle des A-Teilnehmers in einer Meldung für den Verbindungsaufbau/abbau übermittelt wird;
ist ein Verfahren geschaffen, das im betreffenden Telekommunikationsnetz und damit auf den weiteren Vermittlungsstellen ausgenommen jener des B-Teilnehmers keinerlei Adaptionen bedarf und somit mit den bestehenden Empfehlungen und Standards von ITU-T und ETSI konform bleibt. Der Begriff «terminierender automatischer Rückruf» wird deshalb verwendet, weil gemäss der vorliegenden Erfindung die Berechtigung für den Dienst automatischer Rückruf «Call Completion», aufgeteilt ist in eine Komponente Berechtigung zur Aktivierung und eine Komponente Erlaubnis zur Entgegennahme von automatischen Rückrufen, wobei letztere nicht auf die dem B-Teilnehmer zugeordnete Vermittlungsstelle, sondern auf den jeweiligen B-Teilnehmer bezogen ist.

Um hier den exakten Sachverhalt noch einmal in anderen Worten wiederzugeben: Gemäss dem erfindungsgemässen Verfahren handelt es sich um die Zuweisung der Erlaubnis, durch einen automatischen Rückruf angerufen zu werden und nicht etwa um die Erlaubnis, einen automatischen Rückruf zu aktivieren. Die Erfindung sieht zur Ermöglichung einer B-teilnehmerindividuellen Zuordnung der Erlaubnis eines automatischen Rückrufs vor, dass in der Vermittlungsstelle diese Zuordnung auf einer Bereitstellung eines pro B-Teilnehmer individuellen Indikators beruht. In einer Implementation der vorliegenden Erfindung kann dies beispielsweise mittels eines einzigen Bits pro B-Teilnehmer implementiert werden. Dieses Bit beinhaltet die Information:
- «CCBS/CCNR possible»
   Automatischer Rückruf erlaubt, Codierung 1;
   oder
- «CCBS/CCNR not possible»
   Automatischer Rückruf nicht erlaubt, Codierung 0.

Vorteilhafte Ausgestaltungen der Erfindung sind in weiteren Ansprüchen angegeben.

Ausführungsbeispiele der Erfindung werden nachfolgend anhand der Zeichnungen erläutert. Dabei zeigen:
- Figur 1: Konfiguration für den IN-Dienst «Corporate Access» bei Centrex;
- Figur 2: Konfiguration für den IN-Dienst «Corporate Access» bei Einsatz von Nebenstellen;
- Figur 3: Meldungsablauf für das Aufsetzen des CC-Indiktors CCI.

Die nachfolgenden Ausführungsbeispiele offenbaren bevorzugte Ausführungsformen mit einer B-Teilnehmerindividuellen Zuordnung der Erlaubnis eines automatischen Rückrufs.

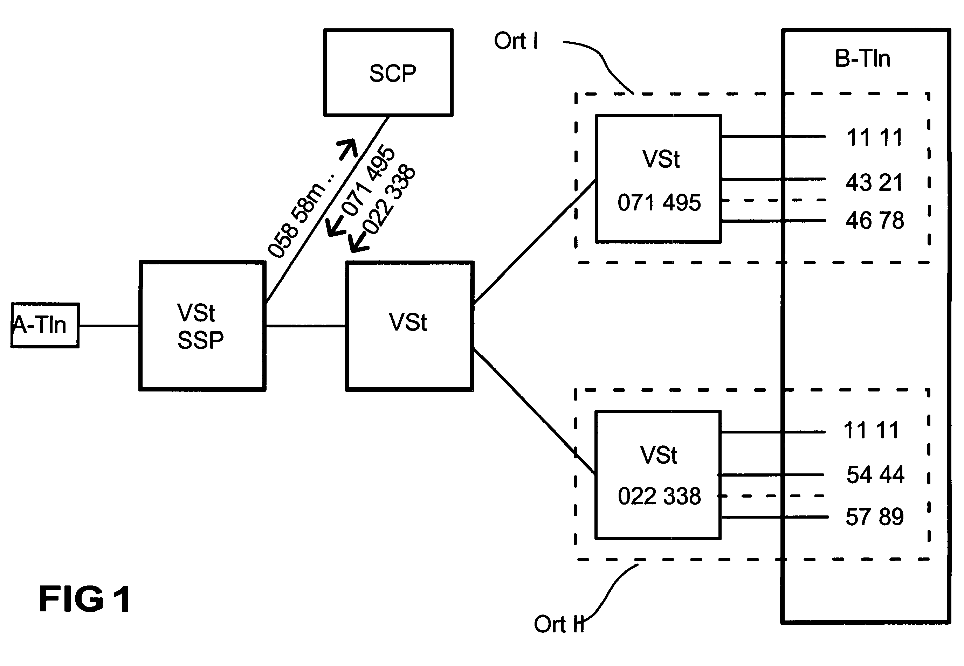

In einer ersten Konfiguration gemäss Figur 1 wird die Erfindung für eine Gruppe von B-Teilnehmer B-Tln erläutert, die mit dem Dienst Centrex an ein Telekommunikationsnetz angeschlossen sind. Dabei wird zugrunde gelegt, dass diese Centrex-B-Teilnehmer B-Tln an verschiedenen Vermittlungsstellen VSt angeschlossen sind. Die verschiedenen Vermittlungsstellen VSt sind dabei geographisch an verschiedenen Orten. Dies ist in der Figur 1 mit Ort I und Ort II bezeichnet. Diesem Ausführungsbeispiel wird ein geschlossener Nummerierungsplan zugrunde gelegt. Die Art des Nummerierungsplans wie der Nummerierungsplan selber ist jedoch für die Ausführung der Erfindung ohne Bedeutung. Ein Unternehmen weist eine Mehrzahl von B-Teilnehmern auf, die in der Figur mit geographischen Rufnummern gekennzeichnet sind. An einem Standort Ort I erfolgt die Adressierung über die geographische, für irgend einen A-Teilnehmer ausserhalb der Centrex-gruppe dieses Unternehmens nicht sichtbare Rufnummer 071 495 nn nn. An einem anderen Standort Ort II sind die Teilnehmer des gleichen Unternehmens mit geographischen Nummern 022 338 mm mm gekennzeichnet. Gemäss der in mehreren Vermittlungsstellen Vst implementierten Centrex-Funktionalität können die Teilnehmer untereinander mit z.B. vierstelliger interner Nummerierung adressiert werden. Anrufe von aussen erfolgen über den IN-Dienst «Corporate Access», im vorliegenden Beispiel mit 058 585 nn nn. Im DienstkontrollKnoten SCP erfolgt aufgrund der gewählten Nummer eine Umrechnung der gewählten Nummer. Diese Umrechnung kann z.B. abhängig ausgestaltet sein von der Rufnummer des A-Teilnehmers und/oder der Tageszeit. Dazu wird im SCP meist eine Datenstruktur in Form einer Tabelle verwendet, die die vorgenannten Bedingungen enthält.

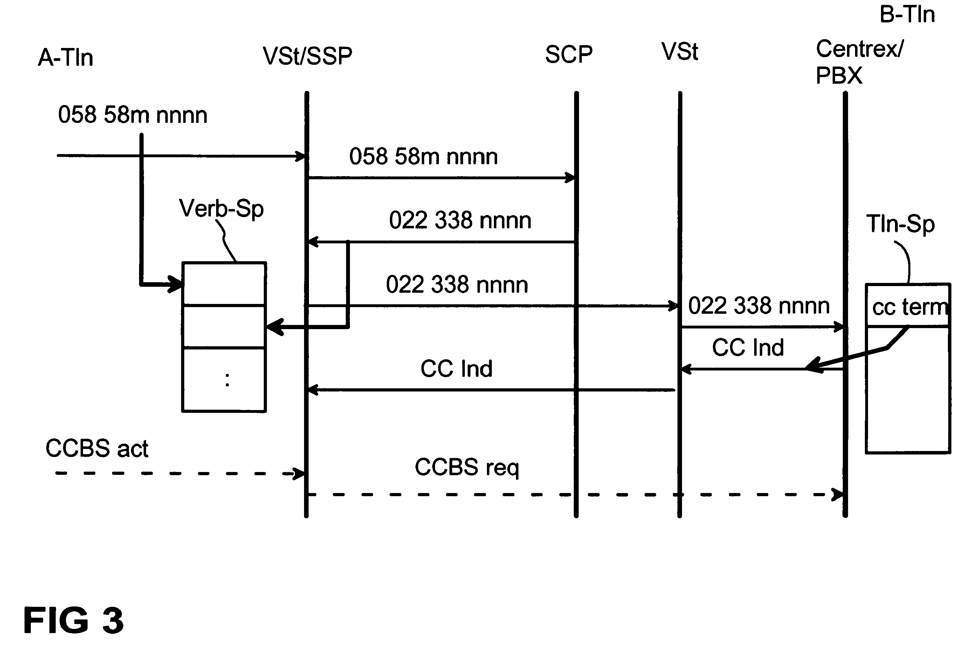

Zur weiteren Erläuterung wird nun auf die Figur 3 Bezug genommen. Im Ausführungsbeispiel gemäss der Konfiguration der Figur 1 für den Fall Centrex ist pro Teilnehmer ein Indikator «cc term» bereitgestellt, der die Information enthält, ob dieser Teilnehmer mit dem Dienst CCBS/CCNR angerufen werden darf. Die Figur 3 zeigt nicht den ganzen Meldungsablauf, sondern lediglich jene Elemente, die für das vorliegend zu erläuternde Verfahren erforderlich sind. Es wird angenommen, dass der angerufene B-Teilnehmer besetzt ist oder nicht antwortet. Dies wird in einer Meldung «RELEASE» zurücksignalisiert. Gemäss dem Stand der Technik bzw. gemäss ITU-T/ETSI Normen für die Protokolle für den Verbindungsaufbau ist in dieser Meldung bereits vorgesehen, ob für die B-Teilnehmer der betreffenden Vermittlungsstelle der Dienst CCBS/CCNR möglich, bzw. erlaubt ist. Es wird nun ein Abbild des vorgenannten B-teilnehmerindividuellen Indikators cc term von der Vermittlungsstelle VSt in dieser Meldung abgelegt. Da diesem Anruf der IN-Dienst «Corporate Access» zugrunde liegt, war vorgängig im Dienstausführungsknoten SSP aufgrund der gewählten Nummer 058 585 nn nn die geographische Nummer 022 338 nn nn eingefügt worden. Die Meldung vom Dienstkontroll-Knoten SCP beinhaltet nicht nur diese Rufnummer, sondern weitere Informationen zur Behandlung des betreffenden Rufes, so gegebenenfalls (abhängig vom IN Capability Set) auch die Information, wie der Indikator CC Ind in der Meldung zu der Vermittlungsstelle des A-Teilnehmers A-Tln zu modifizieren ist. Diese weiteren Informationen sind in einem Verbindungsdatenspeicher Verb-Sp abgelegt. In diesem Verbindungsdatenspeicher Verb-Sp hat die Information betreffend der Modifikation des Indikators CC Ind die Ausprägungen
- «CC no modification»; keine Modifikation
   oder
- «CC not possible».

Auf diese Weise nun ist es möglich, die Erlaubnis eines automatischen Rückrufes B-teilnehmerindividuell dem A-Teilnehmer zu signalisieren unter Beibehaltung der Interventionsmöglichkeit, abhängig vom IN-Dienst; durch den SCP. Diese B-teilnehmerindividuelle Erlaubnis kann fest eingerichtet durch einen Centrex-Administrator eingerichtet sein; es ist aber auch möglich, dass die dem B-Teilnehmer zugeordnete Person mit einer über die Telefontastatur einzugebenden speziellen Zeichenfolge, z.B. *38# die Erlaubnis freigeben und mit #38# diese Erlaubnis sperren kann.

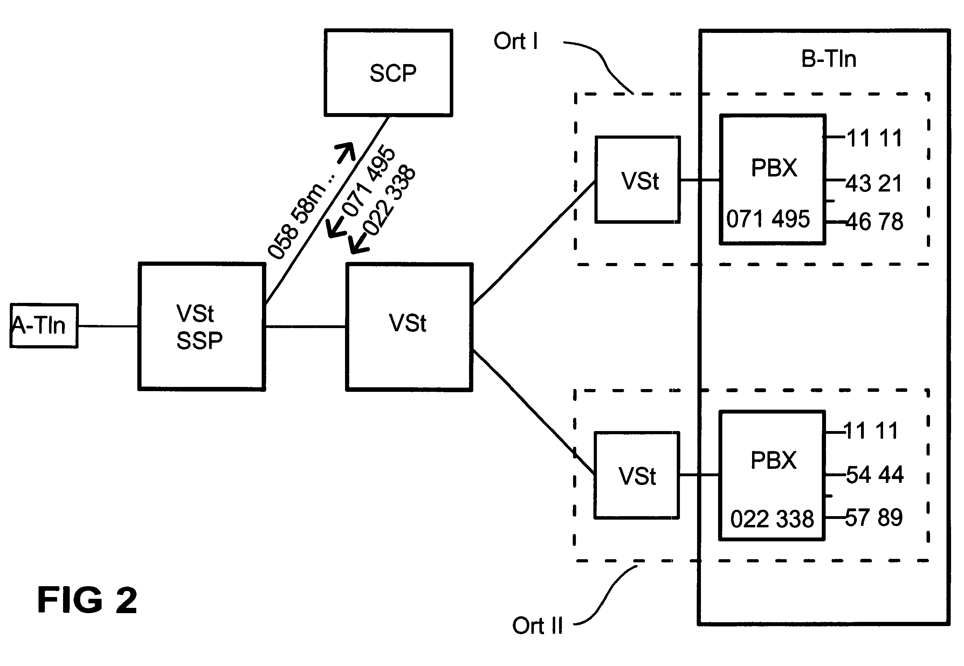

Das Ausführungsbeispiel gemäss der Figur 2 bezieht sich auf ein Unternehmen, dessen Teilnehmer B-Tln an verschiedenen Teilnehmervermittlungsanlagen PBX angeschlossen sind. In der Regel werden diese Teilnehmeranlagen PBX auch an verschiedenen geographischen Orten sich befinden. Dies ist jedoch nicht zwingend, da bei grösseren Unternehmen oder Unternehmen mit einer vitalen Funktion am gleichen Ort aus Redundanzgründen mehrere Teilnehmervermittlungsanlagen PBX vorgesehen sind, die darüber hinaus an verschieden Vermittlungsstellen VSt angeschlossen sind. Dies ist für die vorliegende Erfindung zwar nicht wesentlich, die Erfindung ist aber auch für diese besondere Anschaltung der B-Teilnehmer B-Tln tel quel implementierbar. Üblicherweise ist pro Standort Ort I bzw. Ort II eine sogenannte Zentrale vorgesehen, bei der jene Anrufe eingehen, wo der A-Teilnehmer A-Tln (gemeint ist: die Person hinter dem A-Teilnehmer A-Tln) die Durchwahlnummer des anzurufenden B-Teilnehmers B-Tln nicht kennt. Diese Zentrale weist üblicherweise eine sich leicht zu merkende Rufnummer auf, die Rufnummer terminiert mit «11 11» oder «00 00». Pro Teilnehmer B-Tln auf der Teilnehmervermittlungsanlage PBX ist ebenfalls festlegbar, ob die Erlaubnis für einen externen automatischen Rückruf für den betreffenden B-Teilnehmer B-Tln gegeben ist oder nicht. Für die vorgenannte Zentrale wird in der Regel diese Erlaubnis nicht gegeben. Diese Erlaubnis wird nun ebenfalls in einer Meldung für den Verbindungsaufbau von der Vermittlungsstelle VSt an der die Teilnehmervermittlungsanlage PBX angeschlossen ist, an die Vermittlungsstelle VSt bzw. an den Dienstausführungsknoten SSP übermittelt und dort wie bereits zu Figur 3 ausgeführt im Verbindungsdatenspeicher Verb-Sp abgelegt und ggf. modifiziert. Zu beachten ist, dass in diesem Ausführungsbeispiel in der Vermittlungsstelle VSt, an der eine Teilnehmervermittlungsanlage angeschlossen ist, mit Ausnahme des Nummernbereichs keine vermittlungstechnischen Daten abgelegt sind. Der Nummerbereich stützt sich auf das Verfahren «DDI».

Vom A-Teilnehmer kann gemäss den Konfigurationen in den Figuren 1 und 2 der Dienst CCBS/CCNR dann aktiviert werden, wenn in «seiner» Vermittlungsstelle im Verbindungsspeicher Verb-Sp das Abbild des Indikators auf «CCBS possible» gesetzt ist.

In einer Weiterentwicklung der vorliegenden Erfindung kann vorgesehen sein, dass dieses Abbild des Indikators cc term bis zum A-Teilnehmer selber zurücksignalisiert wird. Auf diese Weise sieht die betreffende Person bei einem Telefonapparat mit Display bereits vor Aktivierung des Dienstes CCBS/CCNR, ob dieser Dienst CCBS/CCNR für den betreffenden Anruf möglich ist.

Denkbar wäre auch eine Anwendung der Erfindung für einen nicht standardisierten Zusatzdienst CC, wie er beispielsweise in WO 03/036928 A1 [5] offenbart ist.

### Liste der verwendeten Bezugszeichen

- A-Tln: A-Teilnehmer, rufender Teilnehmer, A-Subscriber
- B-Tln: B-Teilnehmer, rufender Teilnehmer, B-Subscriber
- CC Ind: Abbild des Indikators cc term in einer Meldung der Signalisierung für den Verbindungsauf/abbau
- cc term: Indikator, enthaltend Kennzeichen zur Erlaubnis eines automatischen Rückrufes
- Ort I: erster Standort oder erster Ort der der Teilnehmervermittlungsanlage PBX zugeordneten Vermittlungsstelle VSt und/oder der Centrex Teilnehmer
- Ort II: zweiter Standort oder zweiter Ort der der Teilnehmervermittlungsanlage PBX zugeordneten Vermittlungsstelle VSt und/oder der Centrex Teilnehmer
- Tln-Sp: Teilnehmerdatenspeiche
- VSt: Vermittlungsstelle

### Liste der verwendeten Abkürzungen und Akronyme

- CC: «Automatischer Rückruf», call completion
- CCI: Informationselement enthaltend automatischer Rückruf möglich/nicht möglich; call completion indicator
- CCBS: «Automatischer Rückruf im Besetztfall», Call completion busy subscriber
- CCNR: «Automatischer Rückruf wenn keine Antwort», Call completion no reply
- DDI: Direct Dialling in, Durchwahl
- IN: Intelligent Network
- ISDN: Integrated Services Digital Network
- ITU: International Telecommunication Union
- ITU-T: Telecommunication Standardization Sector of ITU
- PBX: Teilnehmervermittlungsanlage, Nebenstelle, private branche exchange
- PSTN: Public Switched Telecommunication Network
- SCP: Dienstkontroll-Knoten, Signalling Control Point
- SSP: Dienstausführungsknoten, Signalling Switching Point
- POTS: Plane Old Telephone System

### Literaturverzeichnis

[1] ITU-T 1.253.3 (07-1996)
   Completion of calls to busy subscribers
[2] ITU-T I.253.4 (07-1996)
   Completion of calls on no reply
[3] EN 301 140 V1.3.4 (1999-06)
   Intelligent Network (IN);
   Intelligent Network Application Protocol (INAP)
   Capability Set 2 (CS2)
   Part 1: Protocol specification
   ETSI, 1999
[4] ITU-T F.16 (02-1995)
   Global virtual network Service
[5] WO 03/036928 A1
   «Rückruf bei nicht-besetzt per automatisierter Wahlwiederholung in Telekommunikationsnetzen»
   Anmelderin: T-Mobil Deutschland GmbH.

## Patentansprüche

1. Verfahren zur Vergabe eines Kennzeichens zur Erlaubnis eines terminierenden automatischen Rückrufs (CCBS, CCNR) von einem A-Teilnehmer (A-Tln) zu einem B-Teilnehmer (B-Tln), die je an einer Vermittlungsstelle (VSt) angeschlossen sind,
wobei in der Vermittlungsstelle (VSt) der B-Teilnehmer ein Indikator (CC Ind) bereit gestellt ist, der die Information enthält, ob für die B-Teilnehmer ein automatischer Rückruf (CCBS, CCNR) erlaubt ist;
**gekennzeichnet durch** die Verfahrensschritte
A der Indikator (CC term) wird B-teilnehmerindividuell bereit gestellt,
B die Abbildung des Indikators (CC Ind) wird der Vermittlungsstelle (VSt) des A-Teilnehmers in einer Meldung für den Verbindungsaufbau/abbau übermittelt.

2. Verfahren nach Anspruch 1;
wobei der B-Teilnehmer über einen IN-Dienst mit Nummernumrechnung angewählt wird und der IN-Dienst mittels einem Dienstausführungsknoten (SSP) und einem Dienstkontrollknoten (SCP) bereitgestellt wird,
**gekennzeichnet durch** die Verfahrenschritte
C1 abhängig von der vom Dienstkotrollknoten (SCP) übermittelte Info wird die im Indikator (CC term) enthaltenen Erlaubnis für einen automatischen Rückruf (CCBS, CCNR), im Abbild CC Ind im Dienstausführungsknoten (SSP) modifiziert.

3. Verfahren nach Anspruch 1 oder 2
**dadurch gekennzeichnet, dass**
die B-Teilnehmer an einer Centrex-Gruppe angeschlossen sind.

4. Verfahren nach Anspruch 1 oder 2
**dadurch gekennzeichnet, dass**
die B-Teilnehmer (B-Tln) an einer Teilnehmervermittlungsanlage (PBX) angeschlossen sind.

5. Verfahren nach einem der Ansprüche 1 bis 4
**dadurch gekennzeichnet, dass**
der automatische Rückruf in der Ausprägung «Rückruf bei Besetzt» (CCBS) implementiert ist.

6. Verfahren nach einem der Ansprüche 1 bis 4
**dadurch gekennzeichnet, dass**
der automatische Rückruf in der Ausprägung «Rückruf bei Nicht melden» (CCNR) implementiert ist.
